# EUROPÄISCHE PATENTANMELDUNG

(11) **EP 1 084 816 A2**
(43) Veröffentlichungstag der Anmeldung: **21.03.2001**
(21) Anmeldenummer: 00119476.0
(22) Anmeldetag: 15.09.2000
(51) Int. Cl.: B29C 65/00

(54) **Verbundbauteil**

(30) Priorität: 16.09.1999 DE 19944497
(71) Anmelder: BASF AKTIENGESELLSCHAFT, 67056 Ludwigshafen (DE)
(72) Erfinder: Fischer, Klaus, 67063 Ludwigshafen (DE); Bartholomeyzik, Willi, 67454 Hassloch (DE)
(74) Vertreter: Isenbruck, Günter, Dr.

(57) **Zusammenfassung**

Die Erfindung bezieht sich auf ein Verfahren zur Herstellung eines Verbundbauteiles (3) aus einem mit einer Verrippung (4) versehenen Grundkörper (1) aus Kunststoff, der partiell oder vollständig mit einem Verstärkungselement (2) aus Metall oder verstärktem Kunststoff verbunden wird. Dabei erfolgt die Verbindung von Grundkörper (1) und Verstärkungselement (2) zum Verbundbauteil (3) zur Übertragung von Schub-, Torsions-, Biege- und Zug-/Druck-Beanspruchung nachträglich in einem separaten Arbeitsschritt.

## Beschreibung

Die Erfindung bezieht sich auf ein Verbundbauteil, welches insbesondere aus einem aus thermoplastisch verarbeitbarem Material bestehenden Grundkörper und einem damit verbindbaren Verstärkungselement besteht, welches beispielsweise in der Automobilindustrie eingesetzt wird.

DE-1950 139 bezieht sich auf ein Lüfterrad aus Kunststoff. Dieses besteht aus einer Nabe und von dieser ausgehenden Schaufeln, wobei die Nabe aus zwei konzentrischen gegebenenfalls ein einstückiges Teil bildenden Ringen aufgebaut ist. Im Inneren ist ein Metallboden eingegossen, der die Form eines Napfes hat und in seinem hochgestellten Rand mit Löchern versehen ist, die beim Spritzgußprozeß von der Kunststoffmasse durchströmt werden. Zur Fertigung von Lüfterrädern sind verschiedene Nabenböden verwendbar, die verschieden große Wellenbohrungen und/oder unterschiedliche Anzahl von Löchern für die Befestigungsschrauben aufweisen, wobei Lochkreise verschiedenster Durchmesser möglich sind und sich verschiedene Napfhöhen realisieren lassen, die eine Veränderung der Entfernung von der Aufspannebene bis zur Flügelvorderkante zulassen.

DE-1956 826 betrifft ein Kunststoff-Leichtbauträger, bei dem eine verstärkte Kunststoffwellplatte in einem aus verstärktem Kunststoff bestehenden U-förmigen Obergurtprofil und einem U-förmigen Untergurtprofil einlaminiert wird. Zur Aufnahme größter konstruktiver Spannungen können in den Gurtprofilen jeweils Spannstähle einlaminiert sein.

EP-0 370 342 B1 offenbart ein Leichtbauteil. Das Leichtbauteil besteht aus einem schalenförmigen Grundkörper, dessen Innenraum Verstärkungsrippen aufweist. Diese sind mit dem Grundkörper fest verbunden. Die Verstärkungsrippen bestehen aus angespritztem Kunststoff, dessen Verbindung mit dem Grundkörper an diskreten Verbindungsstellen über Durchbrüche im Grundkörper erfolgt, durch welche der Kunststoff beim Spritzgußprozeß hindurchfließt. Die die diskreten Verbindungsstellen bildenden Verankerungen sind als Sicken ausgebildet. Der Grundkörper des Leichtbauteiles kann zumindest teilweise eine Überzugsschicht aufweisen, welche aus dem gleichen Werkstoff wie die Verstärkungsrippen besteht.

Zur Verbesserung der Verbindung zwischen den Verstärkungsrippen und dem Grundkörper, sind an den Rändern der Durchbrüche Verformungen vorgesehen. Die Verstärkungsrippen weisen an den Verbindungsstellen mit dem Grundkörper einen verbreiterten Fußbereich auf, um eine verbesserte Krafteinleitung zu erzielen. Die sich zwischen den Verstärkungsrippen am Leichtbauteil gemäß EP-O 370 342 B1 ausbildenden Freiräume weisen im wesentlichen einen trapezförmigen Querschnitt auf.

Bei solcherart gefertigten und miteinander verbundenen Leichtbauteilkonstruktionen werden die Verstärkungsrippen an den Grundkörper angespritzt und bilden mit diesem ein verbundenes Bauteil; die aus Kunststoff bestehenden Verstärkungsrippen, sowie aus Metall gefertigte, schalenförmige Grundkörper können bei Temperaturänderungen ein unterschiedliches Dehnungsverhalten annehmen, wodurch es an den Verbindungsstellen im Bereich der Durchbrüche am schalenförmigen Grundkörper und an den Verstärkungsrippen zu unerwünschtem Aufbau von Spannungen kommen kann. Da das Anspritzen von Verstärkungsrippen aus Kunststoff an den schalenförmigen Grundkörper sehr eng tolerierte Anbauteile zum Einlegen in die offene Spritzgußform notwendig macht und das gleichzeitige Handhaben von Metallbauteil und vom anzuspritzendem Kunststoff erfordert, ist eine aufwendige Handhabungsmimik sowie zeitraubende Positionierungsvorgänge der Grundkörper im Spritzgußwerkzeug erforderlich. Dadurch können sich längere Zykluszeiten ergeben und eine insgesamt gesehen teurere Fertigung der Bauteile.

Angesichts der aufgezeigten Lösungen aus dem Stand der Technik liegt der Erfindung die Aufgabe zugrunde, die vorstehend erwähnten Nachteile zu vermeiden und eine wirtschaftlichere Fertigung von in ihrem Längsdehnungsverhalten verbesserten Verbundbauteilen zu ermöglichen.

Erfindungsgemäß wird diese Aufgabe dadurch gelöst, daß bei einem Verfahren zur Herstellung eines Verbundbauteiles aus einem mit einer Verrippung versehenen Grundkörper aus Kunststoff, der partiell oder vollständig mit einem Verstärkungselement aus Metall oder verstärktem Kunststoff verbunden wird, die Verbindung von Grundkörper und Verstärkungselement zu einem Verbundbauteil zur Übertragung von Schub-, Torsions-, Biege- und Zug-/Druck Beanspruchungen nachträglich erfolgt.

Durch die erfindungsgemäß vorgeschlagene Trennung der gleichzeitigen Fertigung und der dabei erfolgenden Verbindung von Grundkörper und Verstärkungselement, läßt sich das Verbundbauteil erheblich einfacher und wirtschaftlicher fertigen. Der nachträglich stattfindende Vorgang der Verbindung zweier Komponenten unterschiedlicher Materialien, ermöglicht es, jede Komponente unter optimalen Bedingungen zu fertigen, so daß sich einstellende Komplexitäten bei der gleichzeitigen Handhabung von Bauteilen und Materialien unterschiedlicher Eigenschaften und eine damit aufwendigere Handhabung vermeiden lassen.

In weiterer Ausgestaltung des der Erfindung zugrundeliegenden Gedankens läßt sich eine nachträgliche Verbindung von Grundkörper und Verstärkungselement auf dem Wege einer stoffschlüssige Verbindung erzeugen. So lassen sich die Innenseite des Verstärkungselementes und die Außenseite des Grundkörpers entweder vollflächig oder nur partiell miteinander verschweißen oder verkleben. Durch Aufbringung einer Kleberschicht zwischen den beiden miteinander zu verbindenden Bauteilen läßt sich eine weitere, beispielsweise Schubspannungen aufnehmende Materialschicht erzeugen, die die mechanischen Eigenschaften des Verbundbauteiles erheblich verbessert.

Neben der Möglichkeit, den Grundkörper und das Verstärkungselement auf stoffschlüssigem Wege miteinander zu verbinden, können diese beiden Bauteile auch nach ihrer jeweils separat erfolgenden Herstellung formschlüssig miteinander verbunden werden. So können am Verstärkungselement, welches bevorzugt aus Metall oder auch aus verstärktem Kunststoff bestehen kann, Durchbrüche vorgesehen werden, die durch Kaltumformung, durch Wärmeeinwirkung oder auch durch Vibration erzeugt werden können und den Durchbrüchen ein etwa trichterförmiges Aussehen verleihen. Beim Verprägen des Grundkörpers mit dem Verstärkungselement dringen die trichterförmigen Bereiche des Verstärkungselementes unter Wärmeeinwirkung oder Vibration in den erweichenden Thermoplasten des Grundkörpers ein und bilden eine nietartige Verbindung aus.

Zur Erzeugung einer formschlüssigen Verbindung zwischen dem Grundkörper und dem diesen im wesentlichen ummantelnden Verstärkungselement lassen sich am Grundkörper Verankerungsansätze anspritzen, in welche Befestigungselemente eingreifen, wie beispielsweise selbstschneidende oder gewindeformende Schrauben. Eine formschlüssige Verbindung zwischen dem verrippten Grundkörper und dem Verstärkungselement läßt sich auch durch Anformung von Nietstiften aus Kunststoff am in Spritzgußtechnik hergestellten Grundkörper erzeugen, indem nach Verbindung von Grundkörper und Verstärkungselement, die die Durchbrüche am Verstärkungselement durchsetzenden Endbereiche der Nieten in einem separaten Vorgang umgeformt werden. Eine solchermaßen erzeugte formschlüssige Verbindung zwischen dem Grundkörper und dem Verstärkungselement läßt bei Längsdehnungen des Verbundbauteiles noch Relativbewegungen zwischen Grundkörper und Verstärkungselement zu, so daß ein Aufbau das Bauteil belastender Eigenspannungen bei Temperaturänderungen unterbleibt.

Die formschlüssige Verbindung am Grundkörper und am Verstärkungselement läßt sich auch dadurch erzielen, daß beispielsweise am Verstärkungselement in einer bestimmten Länge ausgeführte Laschen um den vom Verstärkungselement größtenteils umschlossenen Grundkörper umgebogen werden. Dadurch läßt sich ein Ausgleich von Längendehnungsspannungen einfach durch eine Gleitbewegung herbeiführen, da die Relativbewegung zwischen beiden Bauteilen problemlos möglich ist, ohne die Festigkeit des Bauteiles signifikant zu beeinträchtigen.

Zur Erzielung einer formschlüssigen Verbindung zwischen Grundkörper und Verstärkungselement können am Grundkörper auch Schnappelemente vorgesehen werden, die in Durchbrüche am Verstärkungselement oder am Grundkörper eingreifen, die derart bemessen sind, daß sich thermisch bedingte Spannungen durch Relativbewegung an den Verbindungsstellen zwischen den beiden Bauteilen auf einfache Weise ausgleichen können.

Ein gemäß der vorstehend beschriebenen Verfahrensvarianten hergestelltes Verbundbauteil läßt sich wesentlich wirtschaftlicher fertigen, da in die Hersteilverfahren für die Einzelbauteile nicht eingegriffen wird und das Fügen von Grundkörper und Verstärkungselement erst nachträglich erfolgen.

Anhand einer Zeichnung wird die Erfindung nachstehend näher erläutert.

Es zeigt:
- Figur 1: eine perspektivische Darstellung eines Verbundbauteils mit partieller oder vollflächiger Verklebung bzw. Verschweißung,
- Figur 2: eine perspektivische Darstellung eines Verbundbauteiles mit angespritztem Verankerungsansatz,
- Figur 2a: eine formschlüssige Pressnietverbindung,
- Figur 2b: eine formschlüssige Verbindung erzielt durch selbstschneidende Befestigungselemente,
- Figur 2c: am Grundkörper angeformte Kunststoffnieten,
- Figur 3: die perspektivische Darstellung eines Verbundbauteiles mit umgebogenen Laschen, und
- Figur 4: die perspektivische Darstellung eines Verbundbauteiles mit aus Kunststoff oder aus Metall gefertigten Schnappelementen.

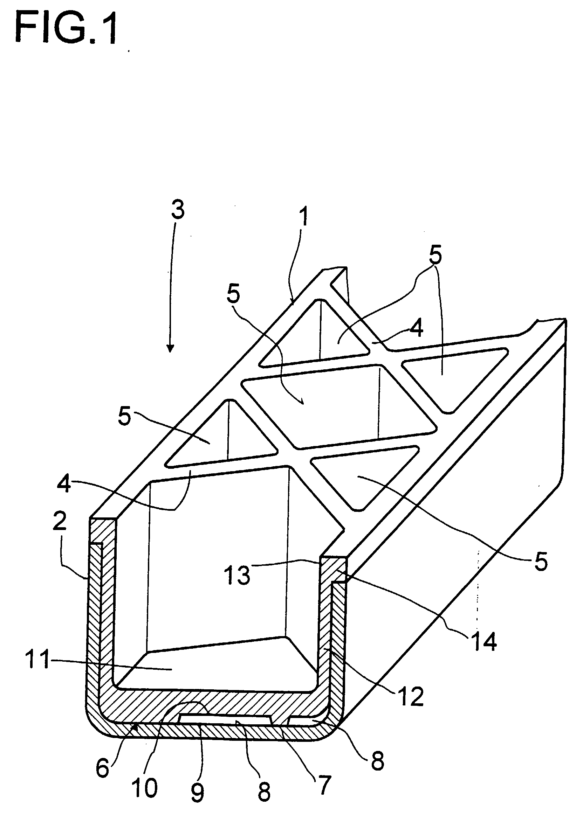

In der Darstellung gemäß Fig. 1 ist eine stoffschlüssige Verbindung zwischen dem Grundkörper und dem Verstärkungselement dargestellt.

Der Grundkörper 1 gemäß Fig. 1 besteht aus einem thermoplastisch verarbeitbarem amorphen oder teilkristallinen Kunststoff wie beispielsweise Polyamide, Polypropylen, Polyethylen, Polyethylen- und Polybutylenterephthalat, Polysulfone, Polycarbonat oder Polystyrol in unverstärkter, gefüllter oder verstärkter Form, sowie deren Copolymere und Blends. Es lassen sich anwendungsspezifisch auch duroplastische Formmassen wie ungesättigte Polyesterharze, Vinylesterharze, Epoxid- und Phenolharze anwenden. Diese lassen sich mit gängigen Verstärkungs- und/oder Füllstoffen modifizieren. Geeignete Verstärkungswerkstoffe sind Fasern, Vliese, Matten oder Gewebe aus Glas, Kohlenstoff, Textil oder Naturstoffen.

Das den Grundkörper 1 umschließende Verstärkungselement 2 kann aus Metallblechen aus Stahl, Aluminium, Magnesium, Titan oder aus Kunststoffblechen aus thermo- oder duroplastischen Werkstoffen bestehen. Der Grundkörper 1 kann gemäß des Spritzgieß-, Blasform-, Extrusions-, Fließpress-oder Thermoformverfahrens hergestellt werden. Das U-förmig profilierte Verstärkungselement 2 läßt sich üblicherweise mit Trenn- und Umformverfahren herstellen.

Der ebenfalls U-förmig profilierte Grundkörper 1 zwischen dessen Verrippung 4 Freiräume 5 vorgesehen sind, ist vom Verstärkungselement 2 umgeben, wobei sich die Innenseite 9 des Verstärkungselementes 2 die Außenseite 10 des Grundkörpers 1 berühren. Der Kontakt zwischen dem Grundkörper 1 und dem Verstärkungselement 2 kann durch eine vollflächige, stoffschlüssige Verklebung oder Verschweißung erfolgen, beispielsweise in einem vollflächig ausgefüllten Kontaktbereich 6. Andererseits kann auch ein lediglich partiell ausgebildeter Kontaktbereich 7 zwischen den Kontaktflächen 9 und 10 ausgebildet sein, wobei der Kontaktbereich 7 etwa linienförmig oder auch punktuell oder in ähnlicher Weise ausgestaltet sein kann. Der Grundkörper 1 bildet in seinem Randbereich 13 einen Überstand 14, mit dem er auf der Seitenwand des U-förmig profilierten Verstärkungselementes 2 aufsitzt, und bis auf die sich zwangsläufig einstellende Trennfuge eine durchgehende Oberfläche bildet.

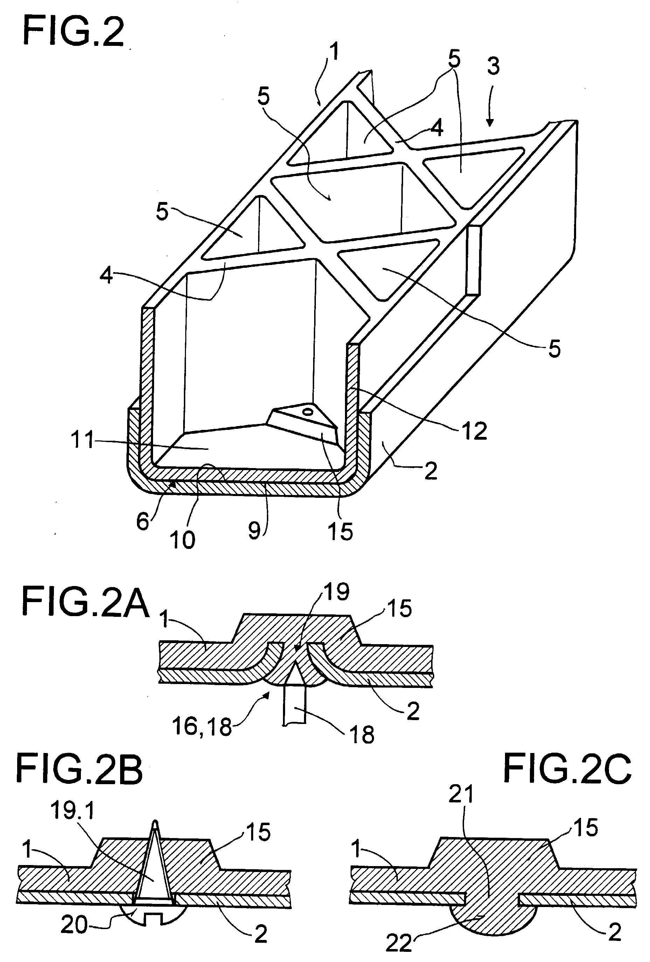

Fig. 2 zeigt die perspektivische Ansicht eines Verbundbauteils 3, dessen Grundkörper 1 mit dem Verstärkungselement 2 formschlüssig verbunden ist.

Dazu kann im Bodenbereich 11 des Grundkörpers 1 ein Verankerungsansatz 15 angespritzt werden, an welchem die formschlüssige Verbindung auf unterschiedliche Weise ausgebildet werden kann. So läßt sich die Verbindung von Grundkörper 1 und Verstärkungselement 2 beispielsweise durch die Ausbildung trichterartige Durchbrüche 19 im Verstärkungselement 2 realisieren. Die trichterartigen Durchbrüche 19 können Bohrungen sein, sie können trichterförmig geformte Durchbrechungen sein, wobei die trichterförmige Kontur durch Kaltumformung im Verstärkungselement 2 erzeugt werden kann. Werden die Bauteile 1 und 2 an ihren entsprechenden Kontaktflächen 9, 10 gemäß Fig. 2 kalt unter Wärmeeinwirkung oder unter Vibration miteinander verprägt, so läßt sich der die trichterförmigen Durchbrüche 19 durchsetzende Werkstoff des Grundkörpers 1 mit Hilfe eines Pressnietwerkzeuges 18 derart verformen, daß sich eine formschlüssige Verbindung gemäß Fig. 2a ausbildet.

Fig. 2b offenbart eine weitere Ausgestaltungsvariante einer formschlüssigen Verbindung, bei der ein Befestigungselement 20 in Gestalt einer selbstschneidenden Schraube oder eine gewindeformende Schraube Verwendung findet. Diese kann entweder von innen nach außen oder auch auf umgekehrtem Wege eine Verbindung zwischen den Bauteilen dem Grundkörper 1 und dem Verstärkungselement 2 herbeiführen. Dazu können im Boden des Verstärkungselementes 1 Bohrungen 19.1 vorgesehen sein. Die Befestigungselemente erfassen dann den am Boden 11 des Grundkörpers 1 angespritzten Verankerungsansatz 15, so daß sich eine ausreichend groß dimensionierte Krafteinleitungsstelle an der Verbundstelle ausbildet.

Fig. 2c zeigt eine Kunststoffvernietung von Grundkörper 1 und diesen umschließenden Verstärkungselement 2. An der Außenseite 9 des Grundkörpers 1 sind Nietstifte 21 angeformt, deren Ende beim Vernieten der beiden Bauteile 1 und 2 miteinander mittels eines Umformwerkzeuges zu Nietköpfen 22 umgeformt werden. Dadurch ergibt sich eine formschlüssige Verbindung zwischen dem Grundkörper 1 und dem Verstärkungselement 2, die aber dennoch in der Lage ist, Eigenspannungen im Verbundbauteil 3 durch Relativbewegung von Grundkörper 1 relativ zum Verstärkungselement 2 zuzulassen.

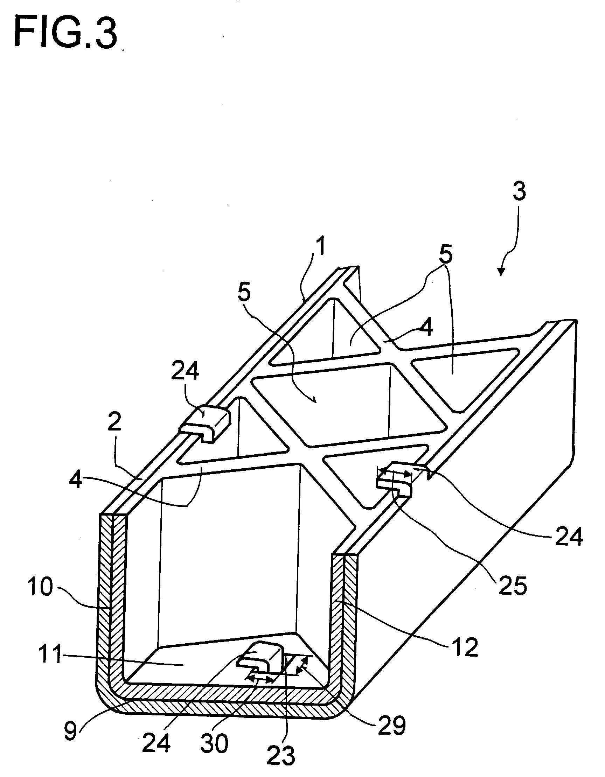

Fig. 3 zeigt die perspektivisch wiedergegebene Ansicht eines Verbundbauteiles mit einer einen Längendehnungsausgleich ermöglichenden als Laschenverbindung ausgeführten formschlüssigen Verbindung.

Bei dieser Ausführungsvariante einer formschlüssigen Verbindung lassen sich am Verstärkungselement 2 Laschen 24 ausbilden, die in einer bestimmten Länge 25 ausgeführt werden können. Durch Umbiegen der Laschenlänge 25 um die Randbereiche 13 des als zu fixierenden Einsatz anzusehenden Grundkörpers 1, bilden die umgebogenen Laschen die Klammern, an denen das aus Grundkörper 1 und diesen umschließenden Verstärkungselement 2 bestehende Verbundbauteil 3 zusammengehalten wird. Die zwischen der Verrippung 4 liegenden Freiräume 5 ermöglichen eine Biegeoperation an den Laschen 24. Neben einer Umklammerung des Grundkörperrandes 13 des Grundkörpers 1 durch die Laschenlänge 25, lassen sich im Boden 11 des Grundkörpers 1 Durchbrüche 23 vorsehen, die eine die Länge der Lasche 24 übersteigende Länge 29 aufweisen können und etwas breiter als die Breite der Laschen 24 ausgeführt sind. Die Laschen 24, die gemäß Fig. 3 den Grundkörperboden 11 des Grundkörpers 1 partiell umgreifen, können eine Relativbewegung von Grundkörper 1 zu Verstärkungselement 2 zulassen und somit einen Ausgleich thermisch bedingter Spannungen im Verbundbauteil 3 bewirken, ohne daß dessen Festigkeit leidet. Dies ist vor allem durch thermische Bedingungen beeinflußte und ausgelöste unterschiedliche Längenausdehnungen von Grundkörper 1 und Verstärkungselement 2 von Bedeutung.

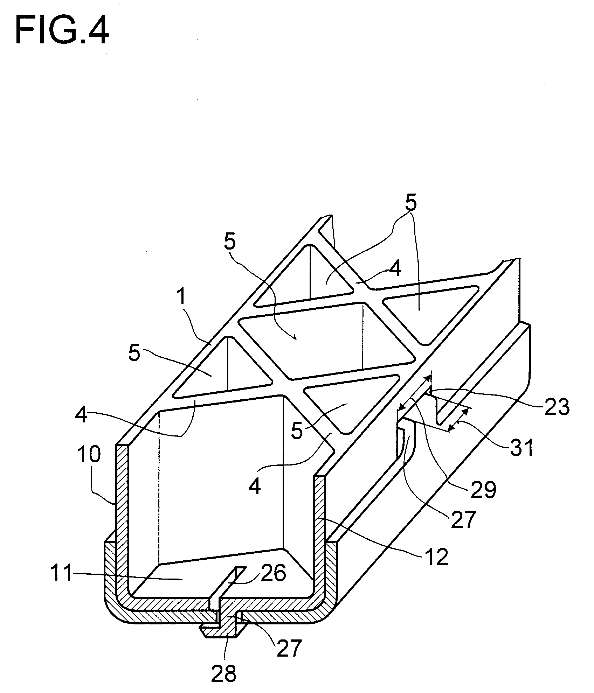

Fig. 4 zeigt eine perspektivische Darstellung eines Verbundbauteiles mit formschlüssigen Verbindungen erzeugenden Schnappelementen, die aus Kunststoff oder aus Metall bestehen.

Im Bereich der Seitenwände des U-förmig profilierten Verstärkungselementes 2 sowie in dessen Bodenbereich, der Sohle, können die Schnappelemente 27 bevorzugt ausgebildet werden. Die Schnappelemente 27 greifen federnd in Durchbrüche 23 ein, die am Grundkörper 1 ausgebildet sind. Es ist unerheblich, ob die Schnappelemente 27 am Grundkörper 1 oder an dem den Grundkörper 1 umfangenden Verstärkungselement 2 ausgebildet sind, beide Ausführungsvarianten sind möglich; die entsprechenden Durchbrüche 23 befinden sich dann jeweils an dem Element des Verbundbauteiles 3. Die Durchbrüche 23 sind mit etwas Übermaß ausgebildet, was deren Länge 29 und deren Breite 30 betrifft Die Länge 29 der Durchbrüche 23 übersteigt die Länge der Laschen 31, so daß diese sich relativ zu den Durchbrüchen 23 bewegen können und einen Abbau thermisch bedingter Spannungen ermöglichen.

Im Sohlebereich des Verbundbauteiles 3 ist der Vorsprung 28 der Schnappelemente 27 ausgebildet, dem ein Einfedern des Vorsprunges 28 ermöglichender Schlitz 26 im Boden 11 des Grundkörpers 1 gegenüberliegt.

Auch diese Konfiguration eines nachträglich in einem separaten Fügeschritt erzeugten Verbundbauteiles 3 hat ein verbessertes Längendehnungsverhalten dank der eine Gleitbewegung zulassenden Schnappelemente 27, die ähnlich den Laschen 24 gemäß Fig. 3 eine Gleitbewegung zwischen Grundkörper 1 und Verstärkungselementen 2 zulassen. Die gemäß des erfindungsgemäßen Verfahrens hergestellten Verbundbauteile 3 können als hochbeanspruchbare Komponenten für die Automobilindustrie dienen wie beispielsweise Frontend, Dachträger, Türmodul, Ölwanne, Zylinderkopfhaube oder auch als Strukturbauteile im Büro- und Informationsbereich Verwendung finden. Ferner können die Verbundbauteile 3 auch in Elektrohaushaltsgeräten sowohl in Klein- als auch in Großgeräten Verwendung finden, die gemeinhin als weiße Ware bezeichnet werden.

### Bezugszeichenliste

- 1: Grundkörper
- 2: Verstärkungselement
- 3: Verbundbauteil
- 4: Verrippung
- 5: Freiraum
- 6: vollflächiger Kontaktbereich
- 7: partieller Kontaktbereich
- 8: Ausnehmung
- 9: Innenseite Verstärkungselement
- 10: Außenseite Grundkörper
- 11: Grundkörperboden
- 12: Grundkörperseitenwand
- 13: Grundkörperrand
- 14: Überstand
- 15: Verankerungsansatz
- 16: Pressnietverbindung
- 17: Formschlüssige Verbindung
- 18: Pressnietwerkzeug
- 19: trichterartiger Durchbruch
- 19.1: Bohrung
- 20: Schraube
- 21: Nietstift
- 22: Nietkopf
- 23: Durchbruch
- 24: Lasche
- 25: Laschenlänge
- 26: Schlitz
- 27: Schnappelement
- 28: Vorsprung
- 29: Durchbruchlänge
- 30: Durchbruchbreite
- 31: Laschenlänge

## Patentansprüche

1. Verfahren zur Herstellung eines Verbundbauteiles (3) aus einem mit einer Verrippung (4) versehenen Grundkörper (1) aus Kunststoff, der partiell oder vollständig mit einem Verstärkungselement (2) aus Metall oder verstärktem Kunststoff verbunden wird, dadurch gekennzeichnet, daß die Verbindung von Grundkörper (1) und Verstärkungselement (2) zum Verbundbauteil (3) zur Übertragung von Schub-, Torsions-, Biege- und Zug-/Druck-Beanspruchungen nachträglich erfolgt.

2. Verfahren zur Herstellung eines Verbundbauteiles (3) gemäß Anspruch 1, dadurch gekennzeichnet, daß die Verbindung von Grundkörper (1) und Verstärkungselement (2) durch eine stoffschlüssige Verbindung erfolgt.

3. Verfahren zur Herstellung eines Verbundbauteiles (3) gemäß Anspruch 2, dadurch gekennzeichnet, daß die Verbindung von Grundkörper (1) und Verstärkungselement (2) durch partielles oder vollflächiges Verschweißen von Kontaktbereichen (6, 7) erfolgt.

4. Verfahren zur Herstellung eines Verbundbauteiles (3) gemäß Anspruch 2, dadurch gekennzeichnet, daß die Verbindung von Grundkörper (1) und Verstärkungselement (2) durch partielles oder vollflächiges Verkleben von Kontaktbereichen (6, 7) erfolgt.

5. Verfahren zur Herstellung von Verbundbauteilen (3) gemäß Anspruch 1, dadurch gekennzeichnet, daß die Verbindung von Grundkörper (1) und Verstärkungselement (2) durch eine formschlüssige Verbindung erfolgt.

6. Verfahren zur Herstellung eines Verbundbauteiles (3) gemäß Anspruch 5, dadurch gekennzeichnet, daß die Verbindung von Grundkörper (1) und Verstärkungselement (2) durch nietartige Verbindungen (16, 21) erfolgt, wobei das Verstärkungselement (2) trichterartige Durchbrüche (19) umfaßt, die kalt, unter Wärmeeinwirkung oder unter Vibration in den Grundkörper (1) eindringen.

7. Verfahren zur Herstellung eines Verbundbauteiles (3) gemäß Anspruch 6, dadurch gekennzeichnet, daß das die Durchbrüche (19) beim Verprägen von Grundkörper (1) und Verstärkungselement (2) durchsetzende Material umgeformt wird.

8. Verfahren zur Herstellung eines Verbundbauteiles (3) gemäß Anspruch 5, dadurch gekennzeichnet, daß die Verbindung von Grundkörper (1) und Verstärkungselement (2) durch in einen angespritzten Verankerungsansatz (15) am Grundkörper (1) eingreifende Befestigungselemente (20) erfolgt.

9. Verfahren zur Herstellung eines Verbundbauteiles (3) gemäß Anspruch 6, dadurch gekennzeichnet, daß am Verstärkungselement (2) Durchbrüche (19) und am Grundkörper (1) diese durchsetzenden Nietstifte (21) angeformt sind, deren Endbereiche zur Erzeugung einer formschlüssigen Verbindung zwischen Grundkörper (1) und Verstärkungselement (2) umformbar sind.

10. Verfahren zur Herstellung eines Verbundbauteiles (3) gemäß Anspruch 5, dadurch gekennzeichnet, daß die Verbindung zwischen Grundkörper (1) durch am Verstärkungselement (2) vorgesehene umgebördelte Laschen (24) an Rändern (13) oder Durchbrüchen (23) erfolgt.

11. Verfahren gemäß Anspruch 5, dadurch gekennzeichnet, daß der Grundkörper (1) oder das Verstärkungselement (2) Schnappelemente (27) enthalten, die Ränder des jeweiligen Gegenteiles (1, 2) über/bzw. in Durchbrüche (23) des jeweiligen Gegenteiles (1, 2) federnd eingreifen.

12. Verbundbauteil (3) bestehend aus einem Grundkörper (1) aus Kunststoff, eine Verrippung (4) enthaltend und einem Verstärkungselement (2) vorzugsweise aus Metall oder verstärktem Kunststoff, dadurch gekennzeichnet, daß der Grundkörper (1) und das Verstärkungselement (2) durch mindestens eines oder mehrere der vorstehend aufgeführten Verfahren nach den Ansprüchen 1 bis 11 miteinander verbunden werden.
